# EUROPEAN PATENT APPLICATION

(11) **EP 4 836 268 A1**
(43) Date of publication of application: **04.11.2026**
(21) Application number: 26174285.2
(22) Date of filing: 23.04.2026
(51) Int. Cl.: H02M 1/32, H02M 7/5387

(54) **INVERTER, DRIVE UNIT, AND METHOD FOR OPERATING AN INVERTER**

(30) Priority: 28.04.2025 DE 102025116335
(71) Applicant: Valeo Electrification, 95892 Cergy Pontoise (FR)
(72) Inventor: RAMBETIUS, Alexander, 91056 Erlangen (DE); LEWANDOWSKI, Marek, 91056 Erlangen (DE)
(74) Representative: Valeo Powertrain Systems

(57) **Abstract**

The invention related to an inverter (12), a drive unit (10) comprising an electric machine (14) and an inverter (12), and a method for operating an inverter (12). The inverter (12) has power electronics (15), a control (35) for operating the power electronics (15), a derating module (38), and a lifetime counter (37) monitoring at least one component of the inverter (12).

## Description

The invention related to an inverter, a drive unit comprising an electric machine and an inverter, and a method for operating an inverter.

Inverters comprise several individual components, such as power electronics, which need to be operated at specific operating conditions, e.g., in view of a respective temperature limits of the components. If the temperature of a component approaches its temperature limit, typically the electrical losses of this component are reduced by a derating of the operating parameters in order to avoid that the temperature limit of the component is exceeded. For example, a current amplitude may be reduced or a torque reduction may be initiated to lower the thermal load on the component. In this regard, the temperature limit of a component is typically assumed to be a fixed value above which severe damage of the component is assumed to immediately occur. As a consequence, the parameter space according to which components may be operated according to prior art approaches is limited. In addition, in view of the temperature limits, the underlying control procedures for operating the respective inverters comprise sudden and drastic control mechanisms such that smooth variations of the operating conditions cannot be achieved.

Hence, there is a need for an inverter providing an enlarged parameter space during operation and allowing tailored control procedures to be achieved.

The subject matter of the independent claims satisfies the need. Preferred embodiments and aspects are disclosed in view of the dependent claims and the following description, each of which may represent aspects of the invention.

An inverter is provided. The inverter has power electronics, a control for operating the power electronics, a derating module, and a lifetime counter monitoring at least one component of the inverter.

In brief, the invention is based on the finding that a lifetime counter can be used to more precisely assess a consumed lifetime (ageing condition) of components of the inverter. Therefore, an objective value is achieved as to how much specific components did already age. Put differently, it can be evaluated how much lifetime of the component has already been consumed. Consequently, the lifetime counter also enables to conclude how long a remaining lifetime of the respective components is. Thus, it can be more precisely determined when maintenance or an exchange procedure is required to be conducted which makes predetermined intervals of maintenance and exchange procedures obsolete. The resources can be more efficiently made use of. Moreover, based on the values determined by the lifetime counter adapted control strategies can be applied such that abrupt variations of the control procedures can be at least postponed if not even avoided. For example, instead of an immediate drastic derating procedure, a smooth transition to reduced performance values of the inverter can be considered.

Preferably, the inverter is configured for use in an electrically powered vehicle. To this end, the inverter may be a high-voltage inverter.

The inverter may be coupled to the electric machine and may be operable for outputting phase currents to the electric machine.

In some embodiments, the inverter and the electric machine may be part of a drive unit for an electrically powered vehicle.

In some embodiments, the inverter may be software controlled, such as by the control.

According to an aspect, the lifetime counter may be adapted for monitoring the operating time of the at least one monitored component of the inverter in at least two different temperature ranges. Hence, the lifetime counter considers different lifetime loads by distinguishing time periods for which the component is operated within a specific temperature range. This leads to more precise values of the consumed lifetime of the component.

Preferably, the lifetime counter is configured to determine an accumulated value regarding the consumed lifetime of the component. The accumulated value comprises partial contributions. Each partial contribution relates to a specific operating time for which the component is operated according to a specific temperature range.

Optionally, the at least one monitored component is at least one of a DC-link capacitor, a Cx-capacitor, a Cy-capacitor, a busbar, a power switch, an electric machine, and an accessory being at least indirectly coupled to the inverter. All of these component types are usually not immediately damaged or even destroyed if their temperature exceeds the respective temperature limits. Hence, the advantageous lifetime evaluation achieved by the inverter are applicable in view of large variety of different components.

Obviously, the lifetime counter may be configured to simultaneously monitor several components of the inverter in view of their consumed lifetimes and may determine respective values of the consumed lifetime of the several component independent from each other.

Preferably, the busbar may be an overmolded busbar.

According to some embodiments, the derating module may have a late life derating switch. Therefore, the derating module may be configured to apply different derating strategies according to the needs. For example, the selection, i.e. the late life derating switch may be triggered by the lifetime values determined by the lifetime counter.

Optionally, the derating module is configured to initiate different derating procedures based on the late life derating switch, such as a standard derating procedure (also called early life derating) and an adapted derating procedure (also called late life derating).

According to the early life derating, a performance of the inverter is reduced. To this end, a torque request may be adapted or a current amplitude may be adjusted. Also, a switching speed of power electronics of the inverter may be reduced. In another alternative or in addition, a modulation pattern and/or a pulse width modulation frequency used for controlling the power electronics may be adapted. The early life derating commonly results in reduced electric losses for the component which in turn results in a reduced thermal load. Therefore, the temperature of the monitored component can be efficiently lowered or at least influenced.

According to the late life derating, the thermal load for a specific monitored component is reduced, usually at the expense of increased electric losses. Put differently, the operation of the inverter is adjusted such that a specific component thereof is less thermally loaded while for other components the thermal load may be increased. This may be beneficial in view of the value of the consumed lifetime of a specific monitored component if this component has aged more than other components. The late life derating may also rely on a torque request which is adapted or a current amplitude which is adjusted. Also, the late life derating may rely on adapting the switching speed of power electronics of the inverter, adapting the modulation pattern and/or the pulse width modulation frequency. The late life derating procedure commonly results in increased electric losses for at least one component of the inverter (but not necessarily the monitored component) such that the inverter is operated more inefficient. Thereby, the benefit of a reduced thermal load for the monitored component is achieved.

In one aspect, the lifetime counter may have an input for receiving at least one additional signal relevant for the lifetime of the at least one monitored component. The additional signal may comprise information on at least one of an electric current, an electric voltage (DC or AC), an electric power, a modulation pattern, a pulse width modulation frequency, and a switching speed. These parameters may also influence the consumed lifetime of the monitored component. As a consequence, the values of the consumed lifetime of the monitored component can be determined more precisely such that tailored control strategies may be applied.

Preferably, the lifetime counter receives a measured signal indicative of a temperature of the at least one monitored component. To this end, the inverter may comprise at least one temperature sensor configured to detect a temperature of the monitored component. In an alternative, the temperature sensor may be separate of the inverter but assigned thereto. Hence, the value of the consumed lifetime can be determined with higher precision.

According to an aspect, the lifetime counter may receive a calculated signal indicative of a temperature of the at least one monitored component. To this end, the control may comprise a temperature estimation module which is configured to estimate a temperature of the monitored component. For example, the temperature estimation module may take into account temperatures measured in view of different components. Also, the temperature estimation module may take into account parameters of the inverter, such as amplitudes of an electric current, amplitudes of an electric voltage (DC or AC), an electric power, a modulation pattern, a pulse width modulation frequency, and a switching speed. Based on these parameters the electrical load on a specific component can be precisely estimated which allows the temperature of the component to be determined.

According to an aspect, the lifetime counter is configured to transmit a determined value of the consumed lifetime of the component to the control.

Preferably, the control can adapt a control procedure for controlling the inverter based on the received values of the determined lifetime of the monitored component and/or based on a triggering signal received from the derating module. For example, the triggering signal may rely on a switching state of the late life derating switch.

According to another aspect, a drive unit comprising an electric machine and an inverter as described herein before is provided. The inverter is coupled to the electric machine and is configured to output phase currents to the electric machine.

The advantages achieved by the before described inverter are also realized based on the drive unit.

According to a further aspect, a method for operating an inverter is provided. The inverter may be configured as described herein before. The method comprises at least the following steps:
- The lifetime counter monitors a temperature at which at least one monitored component is being operated.
- The lifetime counter determines a value which is indicative of a remaining lifetime of the at least one monitored component in real time, based on the operating temperature and an operating time.
- The derating module determines, taking into account the remaining lifetime value determined by the lifetime counter and the temperature of the monitored component, if the inverter has to be operated in a derated mode.

The advantages achieved in view of the inverter described herein before, are readily achieved in view of the method as well. An objective value of the consumed lifetime can be determined which in turn allows the remaining lifetime of a component to be estimated. This provides the possibility to adapt the control strategies for controlling the inverter according to the needs. In particular, the derating module may determine which derating procedure is to be applied in order to optimize the operating efficiency of the inverter without causing damage to the monitored component.

Preferably, the lifetime counter monitors a time the monitored component is being operated above a defined temperature threshold. Based on the temperature threshold different thermal loads on the monitored component can be distinguished such that the consumed lifetime can be estimated more precisely.

Of course, the lifetime counter may consider multiple different temperature thresholds such that the consumed lifetime of the monitored component can be determined ever more precisely. Hence, the information basis provided to the derating module corresponds more appropriately to the respective scenario.

According to an aspect, the lifetime counter may change a state of a late life derating switch when a predefined operating time of the at least one monitored component above the time threshold has been consumed. In other words, the value of an accumulated consumed or remaining lifetime as determined by the lifetime counter may trigger the switching state of the late life derating switch of the derating module. For example, the switching state of the late life derating switch may rely on as to whether the value of the accumulated consumed or remaining lifetime of the monitored component exceeds or falls below a lifetime threshold value.

Optionally, the lifetime counter monitors a temperature at which the at least one monitored component is being operated and determines a consumed lifetime value based on temperature and time. Therefore, partial lifetime consumption contributions can be determined and taken into account, where each partial lifetime consumption contribution relates to a specific operating time at a specific temperature range. The partial lifetime consumption contributions result in an accumulated value of an overall consumed lifetime of a respective monitored component.

In some embodiments, the derating module may take into account a difference between a design lifetime of the at least one monitored component and the determined value of the consumed lifetime and/or the determined value of the remaining lifetime when determining if the inverter can be operated in accordance with a requested performance or has to be operated in a derated mode. Hence, an appropriate control procedure can be applied in order to maximize the operating functionality of the inverter. For example, based on the late life derating procedure, the thermal load on a specific monitored component can be reduced such that no failure of the inverter is caused based on the sole reason that a design lifetime of a single monitored component has be consumed while the remaining lifetimes of other monitored components would allow for significant additional operating times of the inverter. Put differently, based on the derating module, the operating procedure applied for operating the inverter can be tailored according to the specific lifetime scenario such that the operating efficiency of the inverter can be elongated and, in particular, optimized.

Preferably, an adaption of the operating mode of the inverter such that a specific monitored component is exposed to less thermal load can by triggered by the difference between the design lifetime of the at least one monitored component and the determined value of the consumed lifetime or the determined value of the remaining lifetime exceeding or falling below a difference threshold. Thus, a reliable condition is defined if an adaption of the operating procedure is required.

The invention and other advantageous embodiments and further embodiments thereof are described and explained in more detail below with reference to the examples shown in the drawings.
- Fig. 1 shows a schematic drawing of a drive unit according to an embodiment of the invention,
- Fig. 2 shows a schematic drawing of a method for operating an inverter according to an embodiment of the invention, and
- Figs. 3 and 4 show schematic drawings of control procedures applied by the control of the inverter.

All features mentioned below with reference to the embodiments and/or the accompanying figures may be combined alone or in any sub-combination with features of the invention, including features of preferred embodiments.

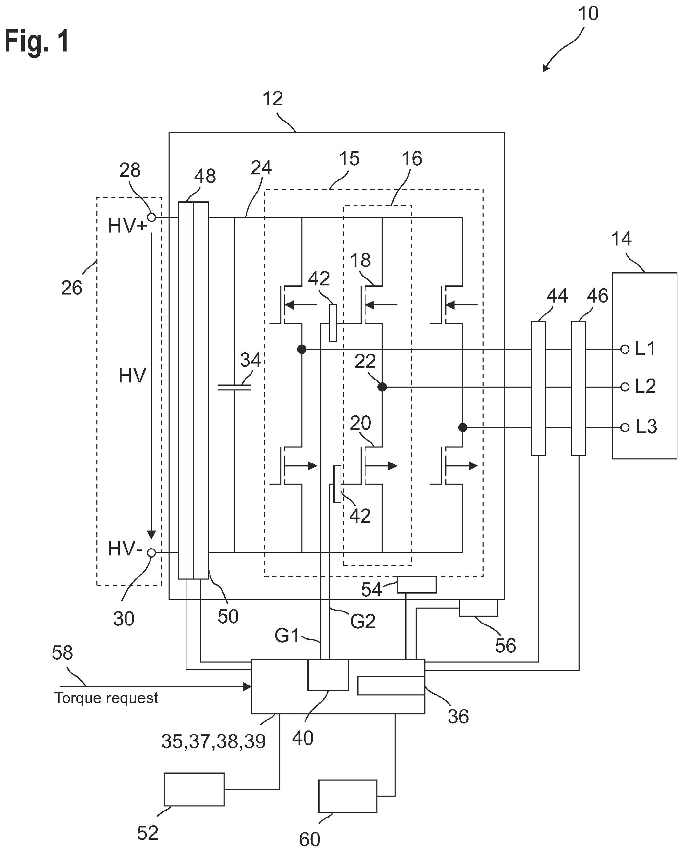

Fig. 1 shows a schematic drawing of a drive unit 10 according to an embodiment of the invention.

The drive unit 10 may be configured for an electric vehicle. The drive unit 10 comprises an inverter 12 and an electric machine 14 coupled to the inverter 12. The inverter 12 may be configured as a high-voltage inverter. The inverter 12 is configured to provide supply signals for the electric machine 14 so that a torque can be output by the electric machine 14 for a component of a vehicle, for example for driving.

In the illustrated embodiment, the inverter 12 comprises power electronics 15 which, according to this embodiment, have a B6 bridge. The B6 bridge has three half-bridges 16. The following functionality is illustrated with reference to only one half-bridge 16, but applies accordingly to all half-bridges 16 of the B6 bridge.

Each half-bridge 16 includes a first power switch 18, such as a transistor, that functions as a high-side power switch, and a second power switch 20, such as a transistor, that functions as a low-side power switch.

The transistors may be metal oxide semiconductor field effect transistors (MOSFETs), insulated gate bipolar transistors (IGBTs), or silicon carbide or gallium nitride field effect transistors (SiC or GaN FETs).

Between the first power switch 18 and the second power switch 20, each half-bridge 16 comprises a center node 22 for outputting a phase current, in this case L2, to the electric machine 14.

Three corresponding phase currents, L1, L2 and L3, are applied to the electric machine 14 via the three half-bridges 16. However, other topologies are possible, which then require corresponding modifications to the inverter 12, for example, a six-phase electric machine 14.

The respective half-bridges 16 are coupled to a busbar 24 of the drive unit 10. The busbar 24 may be overmolded. The inverter 12 is coupled to a DC source 26, for example a high-voltage storage device. The DC source 26 comprises terminals 28, 30, between which a high voltage (HV) is provided, for example with a voltage amplitude of 100 V or more, in particular 400 V or 800 V.

In addition, the inverter 12 comprises a DC-link capacitor 34, which serves as a coupling element between the DC source 26 and the electric machine 14. The DC-link capacitor 34 ensures that the supply signals are designed to be more uniform with regard to the current amplitude and/or voltage amplitude, for example in the case of varying load conditions.

To control the switching states of the power switches 18, 20, the drive unit 10 includes or is coupled to a control 35 being assigned to the drive unit 10 and the electric machine 14. According to this embodiment, the control 35 is a part of the inverter 12. The control 35 includes at least one data processing unit 36.

The control 35 comprises at least a lifetime counter 37 and a derating module 38. According to this embodiment, the control 35 also comprises a temperature estimation module 39.

The control 35 is configured to provide corresponding control signals G1, G2 for the power switches 18, 20, so that the switching positions of the power switches 18, 20 are influenced on the basis of these control signals. The control signals G1, G2 depend on a modulation signal that is determined by means of the data processing unit 36. For example, the control 35 has a pulse width modulator 40 to generate the underlying modulation signal.

The control signals G1, G2 are output to gate driver circuits 42, which are coupled to the gate electrodes of the power switches 18, 20. On the basis of the control signals G1, G2, the gate driver circuits 42 generate corresponding gate signals in order to influence the switching states of the power switches 18, 20.

The control signals G1, G2 can be influenced in particular on the basis of the modulation signal of the pulse width modulator 40. Thereby, the switching speed and/or the switching frequency of the power switches 18, 20 can be influenced. In an alternative, the pulse width modulator 40 may be adapted in view of a pulse width modulation frequency applied by the pulse width modulator 40. According to another alternative, a modulation pattern underlying the modulation signal can be modified according to the respective needs, e.g., by the data processing unit 36.

The control 35 is generally coupled to other components of the drive unit 10 and/or the inverter 12, for example to the electric machine 14, the DC power source 26 or corresponding sensors.

According to this embodiment, the inverter 12 comprises phase current sensors 44 that are arranged between the center node 22 and the electric machine 14. The phase current sensors 44 are set up to detect the phase currents output by the inverter 12 and to transmit them to the control 35.

Moreover, according to the present embodiment, the inverter 12 and/or the drive unit 10 also comprise filter capacitors, such as a Cx-filter 46, a Cy-filter 48, an EMC filter 50, a coolant pump 52 of a cooling system coupled to the inverter 12 and/or the drive unit 10 and/or the electric machine 14, a temperature sensor 54, and an accessory 56 coupled to the inverter 12.

The control 35 is coupled to all of these components according to this embodiment. However, these couplings are optional and can be omitted in other examples.

According to this embodiment, the temperature sensor 54 is coupled to the inverter 12 such that it detects a temperature of the inverter 12 and transmits the detected temperature to the control 35.

On the basis of the received sensor data, such as the sensor data of the phase current sensors 44, the control 35 can output corresponding control signals G1, G2, for example as a function of the rotor position, i.e. depending on the position of the rotor relative to the stator of the electric machine 14, by means of a current control circuit. As a result, the windings of the electric machine 14 are supplied with corresponding phase currents L1, L2, L3. The precise control of the electric machine 14 and thus the characteristics of the control signals G1, G2 generally depend on a torque request 58 that the control 35 receives from a higher-level component of the vehicle. The torque request 58 indicates which output torque is to be provided by the electric machine 14. The torque request 58 represents a requested performance at which the drive unit 10 and therewith the inverter 12 shall be operated.

For example, the torque request 58 may depend on a pedal position of a pedal of the vehicle.

In addition, the control 35 is coupled to a memory device 60 in which a history of operating parameters of the inverter 12 and the drive unit 10, the electric machine 14, and/or components coupled to one of these can be stored.

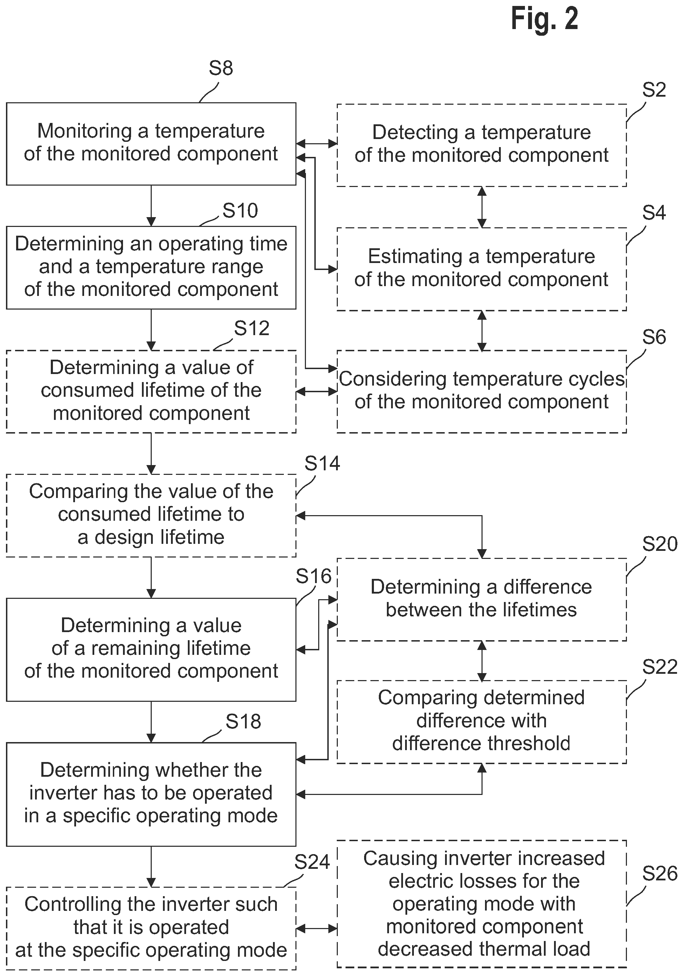

Fig. 2 shows a schematic drawing of a method for operating an inverter 12 according to an embodiment of the invention. Optional steps are shown in dashed lines.

In optional step S2, a temperature of at least one monitored component is detected. The detected temperature is transmitted to the control 35. For example, the temperature sensor 54 coupled to the inverter 12 may be used in this regard.

In optional step S4, a temperature of at least one monitored component is estimated. For example, step S4 may be applied in view of components for which no temperature sensor 54 is provided or applicable. This can be due to restrictions of the installation space or due to expenses which shall be saved. The temperature of a monitored component can for example be estimated by the temperature estimation module 39 of the control 35. In this regard, the temperature estimation module 39 may take into account information of a current operating mode of the inverter 12, such as current amplitudes, voltage amplitudes, switching speeds, a modulation patterns, pulse width modulation frequencies of the pulse width modulator 40, or different operating parameters which influence the temperatures of the monitored components.

Optional step S4 may be further modified by optional step S6. According to optional step S6, the temperature of at least one monitored component is estimated by taking into account temperature cycles performed of the respective component during operation. During use, some monitored component may perform predetermined temperature cycles based on the operating procedures of the inverter 12. A temperature cycle may be considered a specific temperature distribution (profile) during a specific time period. Caused by the operating parameters of the inverter 12, this temperature cycle may be repeated. Hence, based on the number of temperature cycles, the consumed lifetime of a respective monitored component may be determined more precisely. Accordingly, in step S6, the temperature cycles may be counted or a respective point in time during a temperature cycle may be regarded to estimate the temperature of the component in question.

The method comprises the step S8, in which the lifetime counter 37 monitors a temperature at which at least one monitored component is being operated. In this regard, the lifetime counter 37 may take into account the optional steps S2 to S6. For example, a temperature detected by the temperature sensor 54 may be considered by the lifetime counter 37.

In subsequent step S10, the lifetime counter 37 determines operating times at which a monitored component is operated at a respective temperature range. This determination may lead to an accumulated value of operating times at specific temperature ranges such that a characteristic parameter for a specific monitored component is achieved. To distinguish different temperature ranges, temperature thresholds may be regarded by the lifetime counter 37.

In subsequent optional step S12 of the method, the lifetime counter 37 determines an accumulated value of the consumed lifetime of the monitored component. The accumulated value may include partial values which individually rely on contributions of operating times when the monitored component is operated in a specific temperature range. Put differently, the control 35 and in particular the lifetime counter 37, determines how much a specific monitored component did already age. In optional step S12, also the determined number of performed temperature cycles of optional step S6 may be considered.

In subsequent optional step S14, the control 35, e.g. the lifetime counter 37 thereof, compares the accumulated value of the consumed lifetime of the monitored component to a design lifetime of the respective component. The design lifetime may be considered a predetermined parameter set by the manufacturer.

The method proceeds with subsequent step S16, in which the lifetime counter 37 determines a value which is indicative of a remaining lifetime of the monitored component in real time. In this regard, the lifetime counter 37 takes an operating time into account during which the monitored component has a temperature within a specific temperature range, i.e. the values determined in step S10.

Subsequently, in step S18 of the method, the derating module 38 determines if the inverter 12 can be operated in accordance with a requested performance, such as in accordance with the torque request 58, or if the inverter 12 has to be operated in a derated mode. Within step S18, different derating modes may be regarded by the derating module 38. The derating module 38 takes into account the remaining lifetime value determined by the lifetime counter 37. In other words, the derating module 38 determines if the operating mode of the inverter 12 is required to be adapted since elsewise the monitored component would significantly limit the lifetime of the inverter 12 as a whole.

The method may be modified by the optional steps S20 and S22 which may be included to adapt the steps S14 to S18.

According to optional step S20 the derating module 38 may determine a difference between the design lifetime of the monitored component and the accumulated value of the consumed lifetime or between the design lifetime of the monitored component and the remaining lifetime of the monitored component.

In subsequent optional step S22, the derating module 38 may then compare the determined difference of optional step S20 with a difference threshold. Based on an appropriate condition, such as if the difference threshold is exceeded by the determined difference or if the determined difference falls below the difference threshold, the conclusion of step S18 can be triggered in that the inverter 12 is to be operated according to an adapted operating mode.

Following step S18 the method comprises the optional step S24, in which the control 35 operates the inverter 12 including the monitored components such that the inverter 12 is operated at a specific operating mode, which includes potential derating modes determined by the derating module 38. Hence, the inverter 12 is specifically operated such that the thermal load for the monitored component having already aged to a certain extent is regarded.

Optionally, if in step S18 it is determined that a derating mode is to be applied, the control 35 may consider a respective temperature limit which is required to be exceeded by the detected or estimated temperature of the monitored component for the derating mode to be actually applied.

Step S24 may be modified by optional step S26 in that a late life derating mode is applied by the control 35 such that increased electrical losses are caused which enable the thermal load on a specific monitored component to be reduced as compared to different components of the inverter 12 or compared to different operating modes of the inverter 12. Therefore, the ageing of the monitored component can be slowed down. In other words, the inverter 12 is operated more inefficiently on purpose such that additional electrical losses are caused at the advantage of a reduced thermal load for at least one monitored component. This can be achieved exemplarily by modifying at least one of a modulation pattern considered by the pulse width modulator 40, a pulse width modulation frequency of the pulse width modulator 40, and a switching speed of the power switches 18, 20.

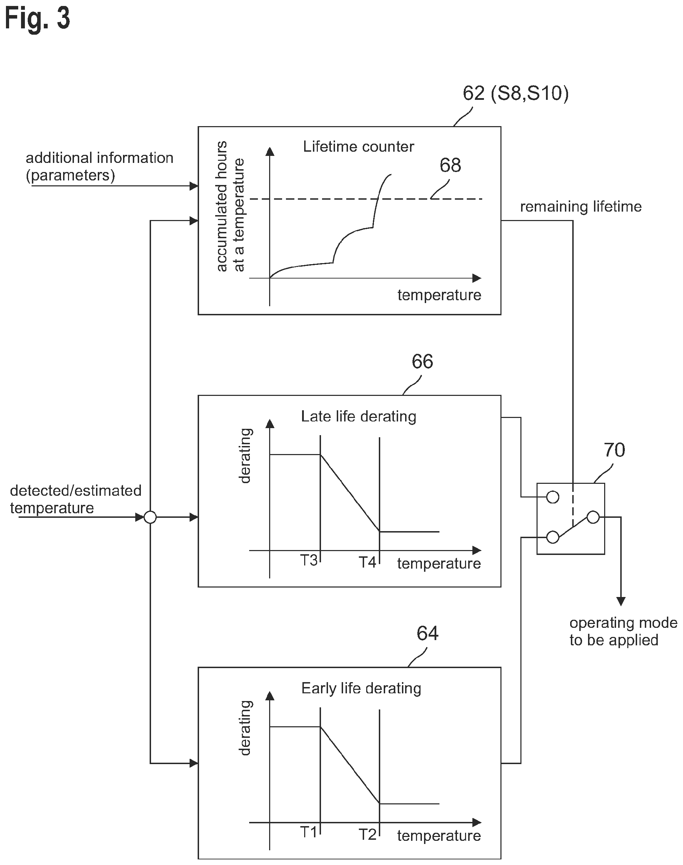

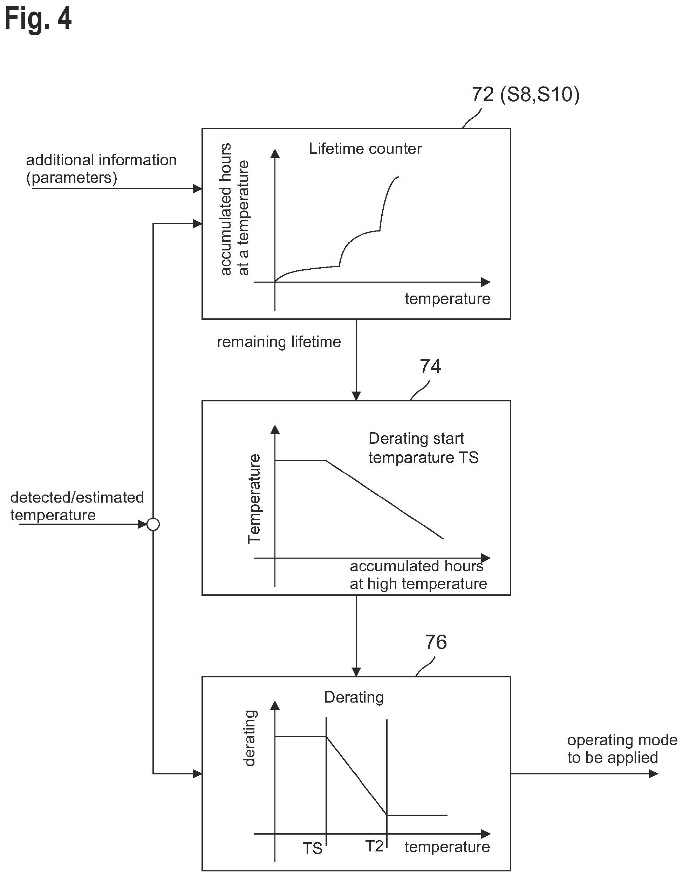

Figs. 3 and 4 show schematic drawings of control procedures applied by the inverter 12, in particular, by the control 35.

According to the control procedure shown in Fig. 3, at module 62, the lifetime counter 37 exemplarily accumulates operating times and respective temperature ranges for a specific monitored component. The chosen temperature range depends on the detected or estimated temperature of the monitored component. For example, the temperature of the monitored component may be estimated based on the temperature estimation module 39. After having compared the accumulated value of the consumed lifetime of the monitored component to the design lifetime, a value of a remaining lifetime of the monitored component is estimated by the lifetime counter 37.

In this regard, the lifetime counter 37 receives information about a current operating mode of the inverter 12, such as parameters thereof and a detected or estimated temperature of the respective component. A detected temperature may be provided by the temperature sensor 54. An estimated temperature may be achieved by the control 35 or the temperature estimation module 39, for example based on the received parameters of the inverter 12.

The control 35 comprises a first operating mode module 64 which relates to a standard derating procedure (early life derating) and a second operating mode module 66 which relates to a modified derating procedure (late life derating). Both, the first and the second operating mode module 64, 66 also take into account the detected or estimated temperature of the respective monitored component.

The control 35 also comprises a late life derating switch 70 as part of the derating module 38 which determines the specific operating mode module 64, 66 to be applied for operation of the inverter 12. The late life derating switch 70 relies on a threshold 68 regarded in view of the determined remaining lifetime of the monitored component in module 62.

If the accumulated value of the consumed lifetime of the respective monitored component is determined to be smaller than the threshold 68, the late life derating switch 70 is triggered such that the early life derating according to the first operating mode module 64 is applied for operating the inverter 12.

In contrast, if the late life derating switch of the respective monitored component is determined to be larger than the threshold 68, the late life derating switch 70 is triggered such that the late life derating according to the second operating mode module 64 is applied for operating the inverter 12.

While for the late life derating the operating mode of the inverter 12 is modified such that the thermal load on the monitored component is reduced as compared to other operating modes (potentially at the expense of increased electric losses), this is not the case for the early life derating. Thus, based on the threshold 68, a triggering event is provided to modify the operating modes only if the determined remaining lifetime of a monitored component is such that the thermal load caused to the component is required to be reduced in order to elongate the operating lifetime of the inverter 12 as a whole.

The control 35 may also apply the control procedure shown in Fig. 4. In this case, according to module 72, the lifetime counter 37 accumulates operating times and respective temperature ranges of a specific monitored component. By considering the design lifetime of the specific component, a remaining lifetime of the monitored component is determined. Again, the detected or estimated temperature of the respective monitored component is taken into account for this evaluation.

The determined remaining lifetime is used according to module 74 in order to determine as to at which start temperature TS a derating procedure is required to be applied to the inverter 12 in order to lower the harm of thermal induced damages and to make best profit of the lifetime limitations of the individual monitored components. For increased values of the determined accumulated value of the consumed lifetime, i.e. for smaller values of the determined remaining lifetime of a specific monitored component, the start temperature TS at which the derating is required to be applied falls to lower values.

In module 76, the detected or estimated temperature of the respective monitored component is considered and compared to the start temperature TS. Once the start temperature TS is exceeded by the detected or estimated temperature of the monitored component, the derating procedure is applied.

According to the control procedure shown in Fig. 4, the derating procedure relates to the late life derating. This means that the operating mode of the inverter 12 is specifically modified in order to reduce the thermal load for a specific monitored component relative to other operating modes, potentially at the expense of increased electric losses.

Accordingly, the inverter12, the drive unit 10, and the method of operating a inverter 12 allow a component of the inverter 12 to be operated above a certain temperature limit for a limited amount of time while the determined accumulated value of the consumed lifetime may be better made use of. For example, the inverter 12 can be operated such that different monitored components comprise equal or similar accumulated values of the consumed lifetimes in view of respective design lifetimes. Therefore, the parameter space for operating the inverter 12 is increased. Also, the lifetime of the inverter 12 is elongated. Moreover, it can be more precisely determined when maintenance or an exchange are required. In addition, by adapting the operating modes, more smooth control procedures can be implemented such that sudden and drastic control procedures can be avoided.

## Claims

1. An inverter (12), the inverter (12) having power electronics (15), a control (35) for operating the power electronics (15), a derating module (38), and a lifetime counter (37) monitoring at least one component of the inverter (12).

2. The inverter (12) of claim 1, wherein the lifetime counter (37) is adapted for monitoring the operating time of the at least one monitored component of the inverter (12) in at least two different temperature ranges.

3. The inverter (12) of claim 1 or 2, wherein the at least one monitored component is at least one of a DC-link capacitor, a Cx-capacitor, a Cy-capacitor, a busbar (24), a power switch (18, 20), an electric machine (14), and an accessory (56) being at least indirectly coupled to the inverter (12).

4. The inverter (12) of any one of the preceding claims, wherein the derating module (38) has a late life derating switch (70).

5. The inverter (12) of any one of the preceding claims, wherein the lifetime counter (37) has an input for receiving at least one additional signal relevant for the lifetime of the at least one monitored component.

6. The inverter (12) of any one of the preceding claims, wherein the lifetime counter (37) receives a measured signal indicative of a temperature of the at least one monitored component.

7. The inverter (12) of any one of claims 1 to 5, wherein the lifetime counter (37) receives a calculated signal indicative of a temperature of the at least one monitored component.

8. A drive unit (10) comprising an electric machine (14) and an inverter (12) according to any one of the preceding claims, the inverter (12) being coupled to the electric machine (14) and being configured to output phase currents to the electric machine (14).

9. A method for operating an inverter (12) as defined in any one of the preceding claims, comprising the following steps:
- The lifetime counter (37) monitors a temperature at which at least one monitored component is being operated,
- The lifetime counter (37) determines a value which is indicative of a remaining lifetime of the at least one monitored component in real time, based on the operating temperature and an operating time,
- The derating module (38) determines, taking into account the remaining lifetime value determined by the lifetime counter (37) and the temperature of the monitored component, if the inverter (12) has to be operated in a derated mode.

10. The method of claim 9, wherein the lifetime counter (37) monitors a time the monitored component is being operated above a defined time threshold.

11. The method of claim 10, wherein the lifetime counter (37) changes a state of a late life derating switch (70) when a predefined operating time of the at least one monitored component above the time threshold has been consumed.

12. The method of claim 9, wherein the lifetime counter (37) monitors a temperature at which the at least one monitored component is being operated and determines a consumed lifetime value based on temperature and time.

13. The method of claim 12, wherein the derating module (38) takes into account a difference between a design lifetime of the at least one monitored component and the determined remaining lifetime value when determining if the inverter (12) can be operated in accordance with a requested performance or has to be operated in a derated mode.
